Europäisches Patentamt

European Patent Office

Office européen des brevets

(11) Veröffentlichungsnummer: **0 363 456 B1**

# EUROPÄISCHE PATENTSCHRIFT

(45) Veröffentlichungstag der Patentschrift: **20.10.93**

(51) Int. Cl.5: **B23B 31/02**, B23C 5/26

(21) Anmeldenummer: **89903104.1**

(22) Anmeldetag: **09.03.89**

(86) Internationale Anmeldenummer:
**PCT/DE89/00150**

(87) Internationale Veröffentlichungsnummer:
**WO 89/08519 (21.09.89 89/23)**

(54) **WERKZEUG, INSBESONDERE AUSBOHRWERKZEUG OD. DGL.**

(30) Priorität: **11.03.88 DE 3808108**

(43) Veröffentlichungstag der Anmeldung:
**18.04.90 Patentblatt 90/16**

(45) Bekanntmachung des Hinweises auf die
Patenterteilung:
**20.10.93 Patentblatt 93/42**

(84) Benannte Vertragsstaaten:
**CH DE FR GB IT LI NL SE**

(56) Entgegenhaltungen:
EP-A- 112 788     EP-A- 157 890
EP-A- 281 760     CH-A- 537 770
DE-A- 2 328 176   DE-A- 3 019 970
DE-A- 3 616 230   DE-C- 3 632 045
FR-A- 2 558 088   GB-A- 2 092 034
GB-A- 2 094 191

(73) Patentinhaber: **J. Kühn GmbH & Co. Präzisionswerkzeug KG**
**Köhler Strasse 41**
**D-46286 Dorsten(DE)**

(72) Erfinder: **JOHNE, Frank**
**Hopener Strasse 24**
**D-2842 Lohne(DE)**

(74) Vertreter: **Palgen, Peter, Dr. Dipl.-Phys.**
**Patentanwälte,**
**Dipl.-Phys. Dr. Peter Palgen,**
**Dipl.-Phys. Dr. H. Schumacher,**
**Mulvanystrasse 2**
**D-40239 Düsseldorf (DE)**

Rank Xerox (UK) Business Services
(3.10/3.6/3.3.1)

**Beschreibung**

Die Erfindung bezieht sich auf ein Werkzeug nach dem Oberbegriff des Anspruchs 1.

Bei einem bekannten Werkzeug dieser Art (EP-A1-0 157 890) ist an einem Schneidkopf ein koaxialer zylindrischer Befestigungszapfen vorgesehen, der eine radial verlaufende, sich konisch verengende Sacklochbohrung aufweist und in eine zylindrische Bohrung einer in die Spindel einer Werkzeugmaschine einspannbaren Aufnahme einschiebbar ist. Zur Verbindung des Schneidkopfes mit der Aufnahme ist ein Gewindestift mit einem konischen Ende in eine Gewindebohrung der Aufnahme eingeschraubt. Im zusammengesetzten Zustand der beiden Teile ragt das konische Ende des Gewindestiftes in die konische Sacklochbohrung im Befestigungszapfen des Schneidkopfes. Der Abstand der Gewindebohrung zu einer vorderen Aufnahmefläche an der Aufnahme ist etwas größer als der Abstand der Achse der Sacklochbohrung im Befestigungszapfen des Schneidkopfes zu einer an dem letzteren vorhandenen Stützfläche. Zur Drehmomentübertragung von der Aufnahme auf den Schneidkopf ist in der Aufnahme eine Ausnehmung vorgesehen, in die Anschlagflächen am Schneidkopf eingreifen. Das Prinzip, einen Schneidkopf mit einem Befestigungszapfen, Ansatz od.dgl. zu versehen, der in eine Bohrung einer Aufnahme eingeschoben wird, ist auch bei anderen bekannten Werkzeugkombinationen anzutreffen.

Dazu kann beispielsweise die DE-A1-29 02 258 genannt werden, nach der an einem rohrförmigen oder massiven Schaft ein Bohrkopf mittels formschlüssiger Verbindung lösbar befestigt werden kann. Der Bohrkopf weist einen hohlen Ansatz mit an dessen Innenumfang angeordneten Nuten auf, die in am Außenumfang des Bohrrohrschaftes befindliche Nuten eingreifen. Dies stellt eine fertigungsmäßig sehr aufwendige Ausführung dar. Eine besondere Verspannung beider Teile ist nicht vorgesehen. Es sind lediglich zur axialen Sicherung im Überlappungsbereich zwei Schrauben mit Abstand in Längsrichtung voneinander vorhanden.

Aufgabe der Erfindung ist es, ein Werkzeug der eingangs genannten Art zu schaffen, bei dem ein Arbeitskopf auf einer Aufnahme sicher und genau lösbar befestigt werden kann, ohne daß es hinsichtlich der Fertigung der jeweils zusammenzufügenden Teile eines besonders hohen Aufwandes bedarf, wobei außerdem eine feste Verspannung beider Teile erreichbar sein soll. Möglichst soll dabei auch eine gewisse Feinjustierbarkeit des Arbeitskopfes relativ zur Aufnahme gegeben sein. Das Werkzeug soll vielfältige Kombinationsmöglichkeiten von Arbeitsköpfen verschiedener Art mit einer unkomplizierten Aufnahme bieten. Mit alledem zusammenhängende weitere Probleme, mit denen sich die Erfindung befaßt, ergeben sich aus der jeweiligen Erläuterung der aufgezeigten Lösung.

Gemäß der Erfindung kennzeichnet sich ein Werkzeug der angegebenen Gattung durch folgende Merkmale:

- der zylindrische Schaft ist an der Aufnahme ausgebildet,
- der zylindrische Hohlraum ist am Arbeitskopf als nach hinten offene Bohrung ausgebildet,
- es sind jeweils drei Gewindebohrungen, konische Einsenkungen sowie Schrauben vorhanden,
- der Winkelabstand zwischen einer ersten Einsenkung und einer zweiten Einsenkung hat einen kleineren Wert als der Winkelabstand zwischen jeder dieser Einsenkungen und der dritten Einsenkung, wobei die Gewindebohrungen im Anschlußteil entsprechend angeordnet sind.

Sowohl die Aufnahme mit dem Schaft als auch der Anschlußteil des jeweiligen Arbeitskopfes sind einfach ausgebildete Teile, so daß deren Bearbeitung keinen besonderen Aufwand erfordert. Vielmehr kann in ganz besonders vorteilhafter Weise bei der Aufnahme sogar von einem handelsüblichen bzw. genormten Element ausgegangen werden, vornehmlich einem Fräserdorn, namentlich einem Aufsteckfräserdorn mit Steilkegel nach deutschen oder ausländischen Normen, mit Nenndurchmessern für den Schaft von 16 mm, 22 mm, 27 mm, 32 mm und 40 mm bzw. entsprechenden Nenndurchmessern aus dem Zoll-System. In dessen Schaft brauchen dann lediglich die Einsenkungen eingearbeitet zu werden. Durch die vorgesehenen drei Schrauben wird nicht nur eine außerordentlich feste Verspannung zwischen den beiden zusammengfügten Teilen erzielt, sondern es wird dadurch auch die Möglichkeit geboten, im Bedarfsfall beide Teile noch im Sinne eines "Trimmens" feinfühlig relativ zueinander zu justieren, insbesondere in radialer Richtung bzw. mit Bezug auf die Drehachse. Es kann dadurch ein etwa bestehendes Spiel ausgemittelt werden, und es lassen sich ggfs. vorhandene Fertigungsfehler korrigieren. In jedem Fall kann eine sehr hohe Rundlauf-Genauigkeit für das Werkzeug erreicht werden. Dies ist von besonderer Bedeutung bei hohen Arbeitsdrehzahlen, wie sie heute angestrebt werden. Bei mehrschneidigen Werkzeugen ergibt sich dadurch auch ein Höchstmaß an Gleichmäßigkeit der Schneidenbelastungen. Der Begriff des Arbeitskopfes ist weit zu verstehen und schließt u.a. auch Reibahlen und ähnliche Werkzeugelemente ein.

Die Differenz zwischen den beiden Längenabständen, d.h. dem Maß zwischen der jeweiligen Anlagefläche und der Mitte der Einsenkung bzw. der Gewindebohrung, kann je nach den Umständen und Erfordernissen gewählt werden. Dabei läßt sich zum einen von der Größe der Einsenkung, insbesondere deren Größtmaß, ausgehen. Darunter ist derjenige Durchmesser zu verstehen, der sich an der Stelle ergibt, wo die konische Einsenkung bzw. die Verlängerung eines konischen Hauptteiles derselben die zylindrische Außenfläche des Schaftes schneidet. Die Differenz der Längenabstände liegt dann vorteilhaft in einem Bereich, der bis etwa 15% des genannten Größtmaßes der Einsenkung reicht.

Bei üblichen Werkzeuggrößen kann die Differenz der Längenabstände als absolutes Maß in einem Bereich bis etwa 1,5 mm liegen. Ein vorteilhafter Wert dieser Differenz beträgt etwa 0,5 mm.

In ihrer Verteilung über den Umfang lassen sich die Einsenkungen im Schaft und entsprechend die Gewindebohrungen im Anschlußteil des Arbeitskopfes in verschiedener Weise vorsehen. Insbesondere liegt die dritte Einsenkung symmetrisch zu den beiden anderen Einsenkungen. Ein zweckmäßiger Bereich für den Winkelabstand zwischen der ersten und der zweiten Einsenkung läßt sich mit etwa 70° bis etwa 110° angeben. Sehr günstig ist ein Winkelabstand von etwa 90°.

Hinsichtlich der Lage der Einsenkungen im Schaft mit Bezug auf die Anlagefläche der Aufnahme bestehen im Rahmen der Erfindung mehrere Möglichkeiten. So können die Einsenkungen von dieser Anlagefläche unterschiedliche Abstände in Schaftlängsrichtung haben. Insbesondere sind die Einsenkungen jedoch mit gleichem Längenabstand von der Anlagefläche angeordnet. Die Gewindebohrungen im Anschlußteil des Arbeitskopfes haben jeweils die passende Lage dazu.

Vorteilhaft sind die Längenabstände der Einsenkungen von der Anlagefläche unter Berücksichtigung des Durchmessers des Schaftes gewählt, derart, daß sie bei größeren Durchmessern größer sind als bei kleineren Durchmessern. Handelt es sich um Aufnahmen mit verhältnismäßig kurzem Schaft, wie es z.B. bei Fräsdornen nach internationalen Normen der Fall ist, so liegt das Verhältnis des Längenabstandes zum Durchmesser des Schaftes vorteilhaft im Bereich von etwa 0,4 bis 0,7 (I/D). Bei Aufnahmen mit verhältnismäßig langem Schaft, etwa bei sog. Kombi-Fräsdornen, liegt dieses Verhältnis vorteilhaft in einem Bereich von etwa 0,7 bis 1,3 (I/D). Günstige Werte im einzelnen sind in den Ansprüchen angegeben. Bei im jeweiligen Fall gewählten Längenabständen kann ggfs. die Einhaltung einer gewissen Toleranz empfehlenswert sein. Es läßt sich insbesondere eine Toleranz von etwa -0,1 bis -0,15 vorsehen.

Der Öffnungswinkel der konischen Einsenkungen kann verschiedene Werte in einem gewissen Bereich haben. Besonders vorteilhaft ist ein Wert von etwa 90°. Hierdurch ergeben sich für die Verspannung sehr günstige Verhältnisse.

Das erfindungsgemäße Werkzeug bietet die Möglichkeit, einen Durchlaß für Kühlmittel in besonders vorteilhafter Weise anzuordnen, insbesondere in der Längsmitte der Aufnahme und des betreffenden Arbeitskopfes, weil hier keine behindernden Teile, Ausnehmungen od.dgl. vorhanden sind. Im Arbeitskopf läßt sich eine einfache Dichtung vorsehen, so daß kein Kühlmittel an Stellen gelangen kann, an denen es nicht erwünscht ist, so auch nicht an die Sitzflächen von Schaft und Anschlußteil des Arbeitskopfes.

Weitere Einzelheiten, Merkmale und Vorteile der Erfindung ergeben sich aus der nachstehenden Erläuterung von Ausführungsbeispielen, aus der zugehörigen Zeichnung und aus den Ansprüchen.

Kurze Beschreibung der Zeichnung

Es zeigen:

Fig. 1     einen Anschlußteil eines Arbeitskopfes im Schnitt,

Fig. 2     den vorderen Teil einer Aufnahme mit Schaft zur Verbindung mit dem Anschlußteil nach Fig. 1,

Fig. 3     einen horizontalen Schnitt durch einen Schaft an der Stelle der Einsenkungen,

Fig. 4     einen der Fig. 3 entsprechenden Schnitt bei einer anderen Ausführung,

Fig. 5     eine Einzelheit in größerem Maßstab,

Fig. 6     eine mit einem Anschlußteil verbundene Aufnahme in gegenüber Fig. 1 und 2 abgewandelter Ausführung, teils im Schnitt nach der Linie VI - VI in Fig. 7,

Fig. 7     einen Schnitt nach der Linie VII - VII in Fig. 5,

Fig. 8     den Bereich einer Einsenkung mit eingedrehter Schraube in stark vergrößertem Schnitt,

Fig. 9     einen Schnitt nach der Linie IX - IX in Fig. 8,

Fig.10     einen Schnitt nach der Linie X - X in Fig. 8,

Fig.11     eine Aufnahme für einen Arbeitskopf in Ansicht,

Fig.12     einen Arbeitskopf in Form eines sog. Zweischneiders,

Fig.13     eine andere Aufnahme in Ansicht,

Fig.14     eine weitere Aufnahme in Ansicht und

Fig.15     einen anderen Arbeitskopf in Form eines Feinbohrkopfes.

Beste Wege zur Ausführung der Erfindung

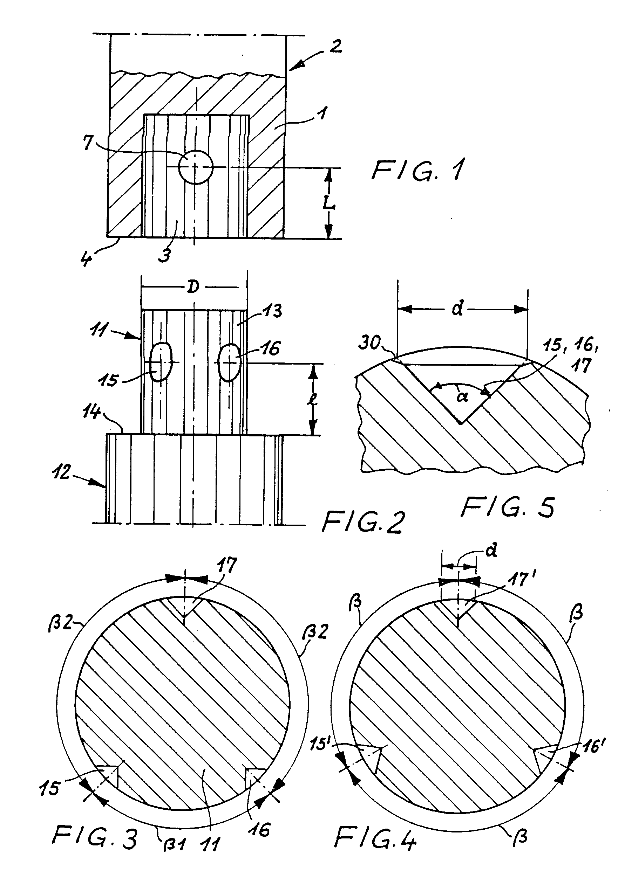

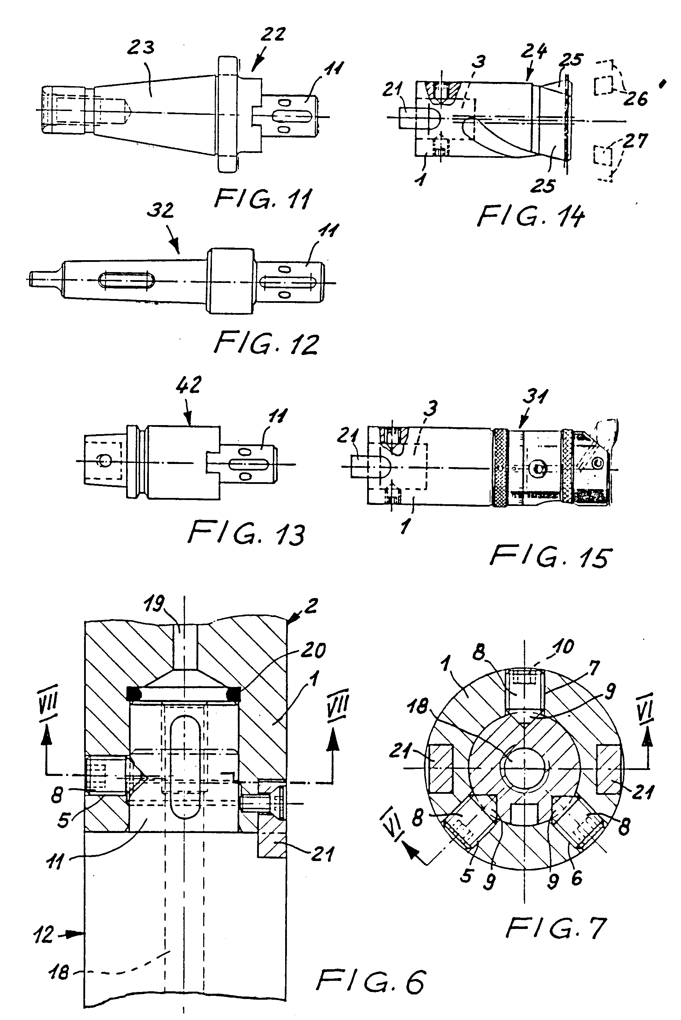

Der in Fig. 1 dargestellte, außen vorteilhaft von einer rotationssymmetrischen Fläche, insbesondere einer Zylinderfläche, begrenzte Anschlußteil 1 bildet das rückwärtige Ende eines Arbeitskopfes 2, der ein oder mehrere Schneidwerkzeuge aufweisen kann. Es handelt sich insbesondere um ein Ausbohrwerkzeug, z.B. der in den Figuren 14 und 15 gezeigten Art. Im Anschlußteil 1 befindet sich eine nach hinten offene zylindrische Bohrung 3 mit einem Durchmesser von bestimmter Genauigkeit.

Die hintere Stirnseite des Anschlußteiles 2 bildet eine ringförmige Anlagefläche 4. Dieser entspricht eine von einer Schulter an einer Aufnahme 12 gebildete ringförmige Anlagefläche 14. Die Aufnahme 12 kann in ihrem hinteren Teil verschiedenartig ausgebildet sein. Sie ist insbesondere ein in die Arbeitsspindel einer Werkzeugmaschine einsetzbarer Teil, namentlich ein Fräsdorn. Die Aufnahme 12 weist einen Schaft 11 mit einer genauen zylindrischen Fläche 13 auf, die einen Sitz für die Bohrung 3 des Anschlußteiles 1 bildet. Der Innendurchmesser der Bohrung 3 ist auf den Außendurchmesser D des zylindrischen Sitzes 13 so abgestimmt, daß sich eine geeignete Passung ergibt, insbesondere eine Passung, wie sie bei Fräsdornen oder ähnlichen Aufnahmen vorkommt.

Der Schaft 11 ist mit drei über seinen Umfang verteilt angeordneten Einsenkungen 15, 16, 17 versehen. Bei der in Fig. 3 gezeigten Ausführung sind dieselben auf ihrer ganzen Tiefe konisch, insbesondere mit einem Öffnungswinkel von a = 90°. Je nach den Umständen kann dieser Winkel aber auch anders gewählt werden. In dem der Sitzfläche 13 benachbarten, also äußeren Bereich der Einsenkungen kann ggfs. eine Vertiefung in der Oberfläche des Schaftes 11 vorgesehen werden, sei es über den ganzen Umfang der jeweiligen Einsenkung, sei es nur in einem zum Ende des Schaftes 11 hin gelegenen Umfangsteil. In Fig. 5 ist eine solche Vertiefung 30 beispielsweise in konischer Form mit größerem Öffnungswinkel als dem Öffnungswinkel a der Einsenkungen 15, 16, 17 selbst gezeigt. Mit dem Buchstaben d ist in den Figuren 4 und 5 jeweils ein Maß bezeichnet, das als Größtmaß der Einsenkungen gelten soll.

Im Anschlußteil 1 sind drei Gewindebohrungen 5, 6, 7 für Schrauben 8 mit kegelförmigen Enden 9 (vgl. auch Fig. 6) an solchen Stellen vorgesehen, daß bei ganz auf den Schaft 11 aufgeschobenem Anschlußteil 1 die Enden 9 der Schrauben 8 in die konischen Einsenkungen 15, 16, 17 hineindrehbar sind. Die Schrauben sind beispielsweise mit Innensechskanten 10 zum Schlüsselangriff versehen.

Je größer die miteinander zu verbindenden Teile sind, umso größer sind zweckmäßig auch die Gewindebohrungen 5, 6, 7. Insbesondere werden diese etwa in Abhängigkeit vom Durchmesser D des Schaftes 11 gewählt. Nach der Größe der Gewindebohrungen 5, 6, 7 richtet sich vorteilhaft auch das Größtmaß der Einsenkungen 15, 16, 17.

Günstige Werte für das Größtmaß sind u.a. d = 5,0 mm für ein Gewinde M 10, d = 6,5 mm für M 12, d = 8,0 mm für M 14, d = 9,0 mm für M 16 und d = 10,0 mm für M 18.

Der Längenabstand der Mitten der Einsenkungen 15, 16, 17 von der Anlagefläche 14 ist mit dem Buchstaben l und der Längenabstand der Mitten der Gewindebohrungen 5, 6, 7 von der Anlagefläche 4 mit dem Buchstaben L bezeichnet.

Die Einsenkungen und dementsprechend auch die Gewindebohrungen können mit gleichen Winkelabständen (β = 120°) über den Umfang verteilt angeordnet sein, wie dies Fig. 4 für die Einsenkungen 15', 16', 17' veranschaulicht. Es kann aber auch vorteilhaft sein, die Winkelabstände β unterschiedlich zu wählen, wie besonders die Figuren 3 und 6 erkennen lassen. Dabei ist der Winkelabstand β1 zwischen einer ersten Einsenkung 15 und einer zweiten Einsenkung 16 kleiner als der Winkelabstand β2 zwischen jeder dieser Einsenkungen und der dritten Einsenkung 17. Dies gilt naturgemäß entsprechend für die Anordnung der Gewindebohrungen 5, 6, 7 im Anschlußteil 1.

Bei den Ausführungen nach den Figuren 1 und 2 sowie 5 und 6 haben die Einsenkungen 15, 16, 17 mit ihren Mitten jeweils denselben Längenabstand l von der Anlagefläche 14 der Aufnahme 12. Ebenso sind alle Gewindebohrungen 5, 6, 7 im Anschlußteil 1 in ein und demselben Längenabstand L von der Anlagefläche 4 des Anschlußteiles angeordnet. Die Längenabstände l für die Einsenkungen sind dabei etwas kleiner als die Längenabstände L für die Gewindebohrungen. Die Differenz V = L - l kann in einem Bereich bis etwa 15% des Größtmaßes d der Einsenkungen 15, 16, 17 liegen (vgl. Fig. 3 und 4). Als Bereich für die Differenz V lassen sich auch Werte bis etwa 1,5 mm nennen. In vielen Fällen ist ein Wert von etwa 0,5 mm für die Differenz sehr günstig.

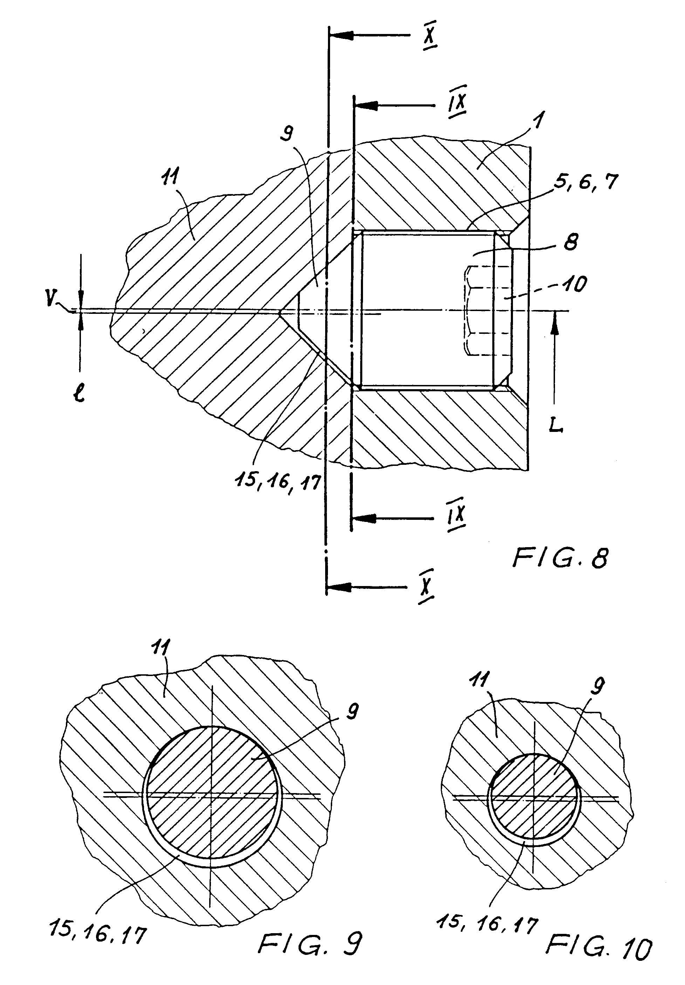

Durch einen solchen Unterschied in den Längenabständen L und l findet beim Eindrehen der Schrauben 5, 6, 7 ein festes Verspannen des Anschlußteiles 1 und somit des Arbeitskopfes 2 mit der Aufnahme 12 statt, wobei die Anlageflächen 4 und 14 fest gegeneinander gepreßt werden. Die Figuren 7 bis 9 veranschaulichen in einer der Deutlichkeit wegen stark übertriebenen Darstellung, wie diese Verspannwirkung zustande kommt.

Das Vorhandensein dreier konischer Einsenkungen mit in diese hineindrehbaren kegelförmigen Schraubenenden ermöglicht in vorteilhafter Weise auch eine feinfühlige Justierung des Anschlußteiles 2 und somit des Arbeitskopfes 2 relativ zur Aufnahme 12 mit dem Schaft 11, so daß sich eine sehr hohe Rundlaufgenauigkeit erzielen läßt.

Die Größe der Längenabmessungen L bzw. l steht insbesondere in gewissen Bereichen in einer Relation zum Durchmesser D des Schaftes 11.

Dadurch ergeben sich sehr günstige Eigenschaften der Verbindung zwischen beiden Teilen und des Zusammenschlusses zu einer steifen Einheit. Bei diesen Bereichen wird zweckmäßig noch zwischen Aufnahmen mit verhältnismäßig kurzem Schaft und solchen mit längerem Schaft unterschieden. Vorteilhafte Werte sind in den Ansprüchen angegeben.

Wie die Figuren 6 und 7 veranschaulichen, kann durch die Verbindung der beiden Teile in besonders günstiger Weise ein Leitungsweg 18 in der Aufnahme 12 und 19 im Arbeitskopf 2 für Kühlmittel hindurchgehen. Weil der mittlere Bereich der Aufnahme 12 mit dem Schaft 11 von quer gerichteten Elementen oder Bohrungen frei ist, läßt sich hier der Leitungsweg ohne Schwierigkeiten vorsehen. Zwischen dem Ende des Schaftes 11 und dem Grund der Bohrung 3 kann eine Dichtung 20 angeordnet sein, die zusätzlich gewährleistet, daß kein Kühlmittel in den Bereich des Sitzes 13 und damit zwischen die zusammengefügten Teile gelangen kann. Als Dichtung 20 kommt besonders ein O-Ring od.dgl. in Betracht, der in einer Nut des Anschlußteiles 1 Aufnahme findet.

Die in Fig. 11 gezeigte Aufnahme 22 ist ein Fräsdorn von üblicher bzw. genormter Grundgestalt mit einem Kegel 23 zum Einsetzen in die Arbeitsspindel einer Werkzeugmaschine und mit einem vorderen Schaft 11, auf den ein Arbeitskopf aufschiebbar ist. Die Aufnahme 22 ist dabei in bekannter Weise so ausgebildet, daß an ihr ihrem rückwärtigen Ende Anzugs- oder Einspannelemente angreifen können, und daß sie im mittleren oder vorderen Bereich vom Greifer einer Werkzeugwechselvorrichtung erfaßt werden kann. Dies ist dem Fachmann geläufig, so daß darauf nicht näher eingegangen zu werden braucht.

Der in Fig. 14 gezeigte Arbeitskopf 24 ist ein Zweischneider mit vorderen, radial verstellbaren Schneidplattenhaltern 25 od.dgl. und mit einem hinteren Anschlußteil 1. Der letztere ist so ausgebildet, wie es in Verbindung mit den Figuren 1, 6 und 7 erläutert worden ist, während der vordere Teil in bekannter Weise gestaltet sein kann, so daß sich die Erläuterung von Einzelheiten dazu erübrigt. Mit gestrichelten Linien 26 und 27 sind schematisch verschiedene Einstellpositionen von Schneidplatten angedeutet.

Die Figuren 12 und 13 zeigen andere Ausführungen von Aufnahmen 32 und 42, die mit Ausnahme der in bestimmter Weise im Schaft 11 vorgesehenen Einsenkungen üblichen Aufnahmedornen od.dgl. entsprechen.

Figur 15 veranschaulicht einen Arbeitskopf 31 in Gestalt eines sog. Feinbohrkopfes. Abgesehen von der besonderen Ausbildung seines Anschlußteiles entspricht derselbe einer üblichen Ausführung.

An einem der beiden Teile, nämlich dem Arbeitskopf oder der Aufnahme, sind zweckmäßig Mitnehmersteine 21 od.dgl. vorgesehen, die in entsprechende Nuten am jeweils anderen Teil eingreifen. Dabei kann zwischen der Breite der Nut und der Breite des von ihr aufzunehmenden Mitnehmersteins eine geeignete Maßtoleranz gewählt werden, derart, daß eine zusätzliche Drehmomentübertragung erreicht wird.

Alle in der vorstehenden Beschreibung erwähnten bzw. in der Zeichnung dargestellten Merkmale sollen, sofern der bekannte Stand der Technik es zuläßt, für sich allein oder auch in Kombinationen als unter die Erfindung fallend angesehen werden.

## Patentansprüche

1. Werkzeug für die spanabhebende Bearbeitung, insbesondere für die Bohrungsbearbeitung, mit zwei lösbar miteinander zu verbindenden Teilen, nämlich einer drehend antreibbaren Aufnahme (12) und einem Arbeitskopf (2), insbesondere Ausbohr- oder Feinbohrkopf, Zweischneider od.dgl., in folgender Ausbildung:
   - der eine der beiden Teile weist einen zu einem Ende hin offenen Hohlraum (3) in Form einer zylindrischen Bohrung auf, in den ein einen entsprechenden zylindrischen Sitz bildender zapfenförmiger Schaft (11) an dem anderen der beiden Teile einschiebbar ist,
   - zwischen der Aufnahme und dem Arbeitskopf ist eine drehmomentübertragende Verbindung herstellbar,
   - am Arbeitskopf und an der Aufnahme sind zum gegenseitigen Kontakt bestimmte ringförmige Anlageflächen (4, 14) vorhanden,
   - einer der beiden Teile ist mit konischen Einsenkungen (15, 16, 17) versehen,
   - im anderen der beiden Teile sind Gewindebohrungen (5, 6, 7) für Schrauben (8) mit kegelförmigen Enden (9) derart vorgesehen, daß bei ganz in den Hohlraum (3) eingeschobenem Schaft die Enden (9) der Schrauben (8) in die Einsenkungen (5, 6, 7) hineindrehbar sind,
   - der Längenabstand (l) von der Mitte der Einsenkungen (15, 16, 17) in dem einen Teil bis zu der an diesem Teil befindlichen Anlagefläche (14) ist kleiner als der Längenabstand (L) von der Mitte der zugeordneten Gewindebohrungen (5, 6, 7) in dem anderen Teil bis zu der an diesem Teil befindlichen Anlagefläche (4),
   gekennzeichnet durch folgende Merkmale:
   - der zylindrische Schaft (11) ist an der Aufnahme (12, 22) ausgebildet,

- der zylindrische Hohlraum (3) ist am Arbeitskopf (2, 24, 31) als nach hinten offene Bohrung ausgebildet,
- es sind jeweils drei Gewindebohrungen (5, 6, 7), konische Einsenkungen (15, 16, 17) sowie Schrauben (8) vorhanden,
- der Winkelabstand ($\beta$1) zwischen einer ersten Einsenkung (15) und einer zweiten Einsenkung (16) hat einen kleineren Wert als der Winkelabstand ($\beta$2) zwischen jeder dieser Einsenkungen (15, 16) und der dritten Einsenkung (17), wobei die Gewindebohrungen (5, 6, 7) im Anschlußteil (1) entsprechend angeordnet sind.

2. Werkzeug nach Anspruch 1, dadurch gekennzeichnet, daß die dritte Einsenkung (17) symmetrisch zu den beiden anderen Einsenkungen (15, 16) angeordnet ist.

3. Werkzeug nach einem der Ansprüche 1 und 2, dadurch gekennzeichnet, daß der Winkelabstand ($\beta$1) zwischen der ersten Einsenkung (15) und der zweiten Einsenkung (16) im Bereich zwischen etwa 70° und 110° liegt, insbesondere etwa 90° beträgt.

4. Werkzeug nach einem der Ansprüche 1 bis 3, dadurch gekennzeichnet, daß die jeweilige Differenz zwischen den beiden Längenabständen (l und L) im Bereich bis etwa 15% des Größtmaßes (d) der Einsenkung (15, 16, 17) liegt.

5. Werkzeug nach einem der Ansprüche 1 bis 4, dadurch gekennzeichnet, daß die jeweilige Differenz zwischen den beiden Längenabständen (l und L) im Bereich bis etwa 1,5 mm liegt, insbesondere etwa 0,5 beträgt.

6. Werkzeug nach einem der Ansprüche 1 bis 5, dadurch gekennzeichnet, daß die Einsenkungen (15, 16, 17) im Schaft (11) in gleichem Längenabstand (l) von der Anlagefläche (14) der Aufnahme (12) vorgesehen sind.

7. Werkzeug nach Anspruch 6, insbesondere mit verhältnismäßig kurzem Schaft, dadurch gekennzeichnet, daß das Verhältnis des Längenabstandes (l) der Einsenkungen (15, 16, 17) im Schaft (11) von dessen Anlagefläche (14) zum Durchmesser (D) des Schaftes (11) im Bereich von etwa 0,4 bis 0,7 liegt.

8. Werkzeug nach den Ansprüchen 6 und 7, dadurch gekennzeichnet, daß bei einem Durchmesser (D) des Schaftes (11) von 16 mm oder von etwa 15,875 mm der Längenabstand (l) 9,8 mm beträgt,

bei einem Durchmesser (D) des Schaftes (11) von 22 mm oder von etwa 22,225 mm der Längenabstand (l) 11.8 mm beträgt, bei einem Durchmesser (D) des Schaftes (11) von 27 mm oder von etwa 25,4 mm der Längenabstand (l) 13,8 mm beträgt, bei einem Durchmesser (D) des Schaftes (11) von 32 mm oder von etwa 31,75 mm der Längenabstand (l) 15,8 mm beträgt, bei einem Durchmesser (D) des Schaftes (11) von 40 mm oder von etwa 38,1 mm der Längenabstand (l) 17,8 mm beträgt.

9. Werkzeug nach Anspruch 6, insbesondere mit verhältnismäßig langem Schaft, dadurch gekennzeichnet, daß das Verhältnis des Längenabstandes (l) zum Durchmesser (D) des Schaftes (11) im Bereich von etwa 0,7 bis 1,3 liegt.

10. Werkzeug nach den Ansprüchen 6 und 9, dadurch gekennzeichnet, daß bei einem Durchmesser (D) des Schaftes (11) von 16 mm oder von etwa 15,875 mm der Längenabstand (l) 19,8 mm beträgt, bei einem Durchmesser (D) des Schaftes (11) von 22 mm oder von etwa 22,225 mm der Längenabstand (l) 23,8 mm beträgt, bei einem Durchmesser (D) des Schaftes (11) von 27 mm oder von etwa 25,4 mm der Längenabstand (l) 24,8 mm beträgt, bei einem Durchmesser (D) des Schaftes (11) von 32 mm oder von etwa 31,75 mm der Längenabstand (l) 24,8 mm beträgt, bei einem Durchmesser (D) des Schaftes (11) von 40 mm oder von etwa 38,1 mm der Längenabstand (l) 29,8 mm beträgt.

11. Werkzeug nach einem der Ansprüche 1 bis 10, dadurch gekennzeichnet, daß für die Größe des Längenabstandes (l) eine Toleranz von etwa -0,1 mm bis -0,15 mm vorgesehen ist.

12. Werkzeug nach einem der Ansprüche 1 bis 11, dadurch gekennzeichnet, daß jeweils wenigstens an einem Teil des Umfangsbereiches der Einsenkungen (15, 16, 17) eine Vertiefung (30) in der Schaftoberfläche vorgesehen ist.

13. Werkzeug nach einem der Ansprüche 1 bis 12, dadurch gekennzeichnet, daß die Aufnahme (12) und der Arbeitskopf (2) durch wenigstens einen Mitnehmer (21) od.dgl. an dem einen Teil, der in eine Ausnehmung an dem anderen Teil eingreift, zusätzlich miteinander kuppelbar sind.

14. Werkzeug nach einem der Ansprüche 1 bis 13, dadurch gekennzeichnet, daß die Aufnahme ein üblicher Fräsdorn (22) ist, in dessen Schaft (11) Einsenkungen eingearbeitet sind.

15. Werkzeug nach Anspruch 14, gekennzeichnet durch einen Aufsteck-Fräserdorn mit Steilkegel als Aufnahme.

16. Werkzeug nach einem der Ansprüche 1 bis 15, dadurch gekennzeichnet, daß es wenigstens einen im wesentlichen im zentralen Bereich angeordneten Leitungsweg (18, 19) für Kühlmittel od.dgl. aufweist.

17. Werkzeug nach einem der Ansprüche 1 bis 16, dadurch gekennzeichnet, daß der Öffnungswinkel (a) der Einsenkungen (15, 16, 17) etwa 90° beträgt.

**Claims**

1. Tool for chip-removal machining, in particular for boring operations, with two components to be detachably connected together, namely a rotatably driven adapter (12) and a working head (2) especially a boring or fine-boring head, two-cutter element or the like in the following form:
   - the one of the two components has a cavity (3) open to its end in the form of a cylindrical bore into which can be inserted a spigot shaped shank (11) forming a corresponding cylindrical seating on the other of the two components,
   - a torque-transmitting connection can be formed between the adapter and the working head,
   - annular engaging faces (4, 14) designed for mutual contact are provided on the working head and on the adapter,
   - one of the two components is provided with conical recesses (15, 16, 17),
   - provided in the other of the two components are screw-threaded bores (5, 6, 7) for screws (8) having conical tips (9), in such a way that when the shank is fully inserted in the cavity (3) the tips (9) of the screws (8) can be screwed into the recesses (5, 6, 7),
   - the longitudinal distance (l) from the centres of the recesses (15, 16, 17) in the one component to the engaging face (14) present on this component is smaller than the longitudinal distance (L) from the centres of the associated threaded bores (5, 6, 7) in the other component to the engaging face (4) present on this component,

   characterised by the following features:
   - the cylindrical shank (11) is formed on the adapter (12, 22),
   - the cylindrical cavity (3) is provided in the working head (2, 24, 31) as a rearwardly open bore,
   - there are provided respectively three screw-threaded bores (5, 6, 7,), conical recesses (15, 16, 17) and screws (8),
   - the angular spacing ($\beta$1) between a first recess (15) and a second recess (16) has a smaller value than the angular spacing ($\beta$2) between each of these recesses (15, 16) and the third recess (17), the threaded bores (5, 6, 7) in the connecting portion (1) being arranged to correspond.

2. Tool according to claim 1, characterised in that the third recess (17) is arranged symmetrically with respect to the two other recesses (15, 16).

3. Tool according to one of claims 1 and 2 characterised in that the angular spacing ($\beta$1) between the first recess (15) and the second recess (16) lies in the range between about 70° and 110° and in particular is about 90°.

4. Tool according to one of claims 1 to 3 characterised in that the respective difference between the longitudinal spacings (l and L) lies in the range up to about 15% of the greatest dimension (d) of the recess (15, 16, 17).

5. Tool according to one of claims 1 to 4 characterised in that the respective difference between the two longitudinal spacings (l and L) lies in the range up to about 1.5 mm, in particular about 0.5.

6. Tool according to one of claims 1 to 5 characterised in that the recesses (15, 16, 17) in the shank (11) are provided at the same longitudinal spacing (l) from the engaging face 14 of the adapter (12).

7. Tool according to claim 6, in particular having a relatively short shank, characterised in that the ratio of the longitudinal distance (l) of the recesses (15, 16, 17) in the shank (11) from its engaging face (14) to the diameter (D) of the shank (11) lies in the range from about 0.4 to 0.7.

8. Tool according to claims 6 and 7 characterised in that
   with the shank (11) having a diameter (D) of 16 mm or of about 15.875 mm the longitudinal distance (1) amounts to 9.8 mm,
   with the shank (11) having a diameter (D) of 22 mm or of about 22.225 mm the longitudinal distance (1) amounts to 11.8 mm,

with the shank (11) having a diameter (D) of 27 mm or of about 25.4 mm the longitudinal distance (1) amounts to 13.8 mm,

with the shank (11) having a diameter (D) of 32 mm or of about 31.75 mm the longitudinal distance (1) amounts to 15.8 mm,

with the shank (11) having a diameter (D) of 40 mm or of about 38.1 mm the longitudinal distance (1) amounts to 17.8 mm.

9. Tool according to claim 6, in particular having a relatively long shank, characterised in that the ratio of the longitudinal distance (1) to the diameter (D) of the shank (11) lies in the range of about 0.7 to 1.3.

10. Tool according to claims 6 and 9 characterised in that with the shank (11) having a diameter (D) of 16 mm or of about 15.875 mm the longitudinal distance (1) amounts to 19.8 mm,

with the shank (11) having a diameter (D) of 22 mm or of about 22.225 mm the longitudinal distance (1) amounts to 23.8 mm,

with the shank (11) having a diameter (D) of 27 mm or of about 25.4 mm the longitudinal distance (1) amounts to 24.8 mm,

with the shank (11) having a diameter (D) of 32 mm or of about 31.75 mm the longitudinal distance (1) amounts to 24.8 mm,

with the shank (11) having a diameter (D) of 40 mm or of about 38.1 mm the longitudinal distance 1 amounts to 29.8 mm.

11. Tool according to one of claims 1 to 10 characterised in that a tolerance of about - 0.1 mm to -0.15 mm is provided for the size of the longitudinal distance (1).

12. Tool according to one of claims 1 to 11 characterised in that respectively at least at one part of the peripheral region of the recesses (15, 16, 17) a deepening (30) is provided in the surface of the shank.

13. Tool according to one of claims 1 to 12 characterised in that the adapter (12) and the working head (2) can additionally be coupled together by at least one driver (21) or the like on the one component engaging in a recess in the other component.

14. Tool according to one of claims 1 to 13 characterised in that the adapter is an orthodox milling head (22) with the recesses machined in its shank (11).

15. Tool according to claim 14 characterised by a snap-on milling head with a coarse taper as the adapter.

16. Tool according to one of claims 1 to 15 characterised in that it has at least one passage (18, 19) for coolant or the like arranged substantially in its central region.

17. Tool according to one of claims 1 to 16 characterised in that the angle (a) of the recesses (15, 16, 17) amounts to about 90°.

**Revendications**

1. Outil pour l'usinage par enlèvement de copeaux, en particulier pour l'usinage d'alésage, avec deux pièces à relier entre-elles de façon amovible, c'est-à-dire une pièce réceptrice (12) pouvant être entraînée en rotation et une tête de travail (2), en particulier une tête d'alésage ou de perçage de précision, une mèche à deux tranchants ou équivalents dans la réalisation suivante :

   - l'une des deux pièces comprend un espace creux (3), ouvert à une extrémité, sous la forme d'un perçage cylindrique, dans lequel peut être insérée une tige (11), en forme de pivot formant une assise cylindrique correspondante, sur la seconde pièce,
   - entre la pièce réceptrice et la tête de travail peut être établie une liaison de transmission du couple,
   - sur la tête de travail et sur la pièce réceptrice existent des faces d'appui (4, 14) annulaires définies pour créer un contact réciproque,
   - une des deux pièces est munie de fraisages coniques (15, 16, 17),
   - dans l'autre pièce, sont prévus des alésages filetés (5, 6, 7) pour des vis (8) avec des extrémités coniques (9), de façon que les extrémités (9) des vis (8) puissent pénétrer en tournant dans les fraisages (15, 16, 17) lors de l'introduction complète de la tige dans l'espace creux (3),
   - la distance longitudinale (l) du milieu des fraisages (15, 16, 17) dans l'une des pièces jusqu'à la face d'appui (14) se trouvant sur cette même pièce est plus petite que la distance longitudinale (L) du milieu des alésages filetés associés (5, 6, 7) de l'autre pièce jsuqu'à la surface d'appui (4) se trouvant sur cette pièce-là,

   outil caractérisé par les particularités suivantes :

- la tige cylindrique (11) est réalisée sur la pièce réceptrice (12, 22),
- l'espace creux cylindrique (3) est réalisé sur la tête de travail (2, 24, 31) en tant que perçage ouvert vers l'arrière,
- il existe respectivement trois alésages filetés (5, 6, 7), trois fraisages coniques (15, 16, 17) ainsi que trois vis (8),
- la distance angulaire ($\beta_1$) entre un premier fraisage (15) et un deuxième fraisage (16) a une valeur plus petite que la distance angulaire ($\beta_2$) entre chacune de ces fraisages (15, 16) et le troisième fraisage (17), les alésages filetés (5, 6, 7) de la pièce d'assemblage (1) étant disposés de façon correspondante.

2. Outil selon la revendication 1, caractérisé en ce que le troisième fraisage (17) est placé de façon symétrique par rapport aux deux autres fraisages (15, 16).

3. Outil selon une des revendications 1 et 2, caractérisé en ce que la distance angulaire ($\beta_1$) entre le premier fraisage (15) et le deuxième fraisage (16) se situe dans la zone comprise entre 70° et 110°, en particulier se monte environ à 90°.

4. Outil selon une des revendications 1 à 3, caractérisé en ce que la différence respective entre les deux distances longitudinales (l et L) se situe à un niveau se montant jusqu'à 15 % de la dimension maximale (d) des fraisages (15, 16, 17).

5. Outil selon une des revendications 1 à 4, caractérisé en ce que la différence relative entre les deux distances longitudinale (l et L) se situe à un niveau pouvant atteindre jusqu'à 1,5 mm, en particulier se monte à environ 0,5 mm.

6. Outil selon une des revendications 1 à 5, caractérisé en ce que les fraisages (15, 16, 17) sont prévus dans la tige (11) à la même distance longitudinale (l) de la face d'appui (14) de la pièce réceptrice (12).

7. Outil selon la revendication 6, en particulier avec une tige relativement courte, caractérisé en ce que le rapport entre la distance longitudinale (l) des fraisages (15, 16, 17) dans la tige (11) depuis la face d'appui (14) de celle-ci et le diamètre (D) de la tige (11) se situe dans la gamme d'environ 0,4 à 0,7.

8. Outil selon les revendications 6 et 7, caractérisé en ce que :

- pour un diamètre (D) de la tige (11) de 16 mm ou d'environ 15,875 mm, la distance longitudinale (l) se monte à 9,8 mm,
- pour un diamètre (D) de la tige (11) de 22 mm ou d'environ 22,225 mm, la distance longitudinale (l) se monte à 11,8 mm,
- pour un diamètre (D) de la tige (11) de 27 mm ou d'environ 25,4 mm, la distance longitudinale (l) se monte à 13,8 mm,
- pour un diamètre (D) de la tige (11) de 32 mm ou d'environ 31,75 mm, la distance longitudinale (l) se monte à 15,8 mm,
- pour un diamètre (D) de la tige (11) de 40 mm ou d'environ 38,1 mm, la distance longitudinale (l) se monte à 17,8 mm.

9. Outil selon la revendication 6, en particulier avec une tige relativement longue, caractérisé en ce que le rapport de la distance longitudinale (l) au diamètre (D) de la tige (11) se situe dans la gamme d'environ 0,7 à 1,3.

10. Outil selon les revendications 6 et 9, caractérisé en ce que :

- pour un diamètre (D) de la tige (11) de 16 mm ou d'environ 15,875 mm, la distance longitudinale (l) se monte à 19,8 mm,
- pour un diamètre (D) de la tige (11) de 22 mm ou d'environ 22,225 mm, la distance longitudinale (l) se monte à 23,8 mm,
- pour un diamètre (D) de la tige (11) de 27 mm ou d'environ 25,4 mm, la distance longitudinale (l) se monte à 24,8 mm,
- pour un diamètre (D) de la tige (11) de 32 mm ou d'environ 31,75 mm, la distance longitudinale (l) se monte à 24,8 mm,
- pour un diamètre (D) de la tige (11) de 40 mm ou d'environ 38,1 mm, la distance longitudinale (l) se monte à 29,8 mm.

11. Outil selon une des revendications 1 à 10, caractérisé en ce que pour la valeur de la distance longitudinale (l) est prévue une tolérance d'environ -0,1 mm à -0,15 mm.

12. Outil selon une des revendications 1 à 11, caractérisé en ce qu'il est prévu respectivement au moins sur une partie de la zone de pourtour des fraisages (15, 16, 17), un évidement (30) dans la surface de la tige.

13. Outil selon une des revendications 1 à 12, caractérisé en ce que la partie réceptrice (12) et la tête de travail (2) peuvent être, en plus, accouplées ensemble par au moins un tenon d'entraînement (21) ou équivalent prévu sur l'une des pièces et qui s'engage dans un creux de l'autre pièce.

14. Outil selon une des revendications 1 à 13, caractérisé en ce que la pièce réceptrice est un mandrin de fraisage courant (22), dans la tige (11) duquel sont usinées des fraisages.

15. Outil selon la revendication 14, caractérisé par un mandrin de fraisage avec un cône fort comme pièce réceptrice.

16. Outil selon une des revendications 1 à 15, caractérisé en ce qu'il a au moins une voie de pénétration (18, 19) disposée essentiellement dans la zone centrale et servant pour un agent de refroidissement ou équivalent.

17. Outil selon une des revendications 1 à 16, caractérisé en ce que l'angle d'ouverture (a) des fraisages (15, 16, 17) est d'environ 90°.

EP 0 363 456 B1

FIG. 1

FIG. 2

FIG. 5

FIG. 3

FIG. 4

11

FIG. 8

FIG. 9

FIG. 10

FIG. 11

FIG. 12

FIG. 13

FIG. 14

FIG. 15

FIG. 6

FIG. 7

13